Europäisches Patentamt

European Patent Office

Office européen des brevets

(11) Publication number: **0 102 784**
**B1**

# EUROPEAN PATENT SPECIFICATION

(45) Date of publication of patent specification: **01.06.88**

(51) Int. Cl.⁴: **G 06 F 1/02**

(21) Application number: **83304686.5**

(22) Date of filing: **12.08.83**

(54) Method and apparatus for sine function generation.

(30) Priority: **13.08.82 US 407844**

(43) Date of publication of application:
**14.03.84 Bulletin 84/11**

(45) Publication of the grant of the patent:
**01.06.88 Bulletin 88/22**

(84) Designated Contracting States:
**DE FR GB**

(56) References cited:
ELEKTRONIK, vol. 32, no. 9, May 1983,
MÜNCHEN (DE), p. 59-62, W. TAETOW:
"Digitale Multiplizierer in CMOS-Technik"
WISSENSCHAFTLICHE BERICHTE AEG-
TELEFUNKEN, vol. 43, no. 3/4, March 17, 1971,
BERLIN (DE), p. 159, 169-170, D. MANN et al.:
"Entwurf und Simulation eines digitalen MTI-
Filtersystems"
I.E.E. PROCEEDINGS SECTION AAI, vol. 129,
no. 1, Part G, OLD WOKING, SURREY (GB), p.
19-25, M.S. TOWERS: "Programmable
waveform generator using linear interpolation
with multiplying D/A convertors"

(73) Proprietor: **Hewlett-Packard Company**
**Mail Stop 20 B-O 3000 Hanover Street**
**Palo Alto California 94304 (US)**

(72) Inventor: **Kovalick, Albert W.**
**2650 Webster Court**
**Santa Clara California 95051 (US)**

(74) Representative: **Patentanwälte Kohler -**
**Schwindling - Späth**
**Hohentwielstrasse 41**
**D-7000 Stuttgart 1 (DE)**

Courier Press, Leamington Spa, England.

## Description

This invention is related to a method and apparatus of converting a binary input signal representing phase to an output signal representing amplitude, by addressing a first memory means for storing amplitude values with said binary input signal to provide an amplitude signal, addressing a second memory means for storing slope values with said binary input signal to provide a slope signal, and combining said slope signal and said amplitude signal to provide said output amplitude signal.

Such a method is disclosed in IEE Proceedings Section AAI, Volume 129, No. 1, Part G. Old Woking, Surrey, pages 19—25. In the known method, the amplitude signal provided by the first memory means is a staircase signal, whereas the slope signal provided by the second memory means is a kind of sawtooth signal. Both signals are added to provide the desired waveform, especially a sine signal.

The addition of a staircase signal and a sawtooth signal results in a waveform which is composed of a plurality of straight sections and thus only an approximation of the desired waveform. Further, both the staircase signal and the sawtooth signal contain abrupt transitions which result in spikes or glitches in the produced waveform.

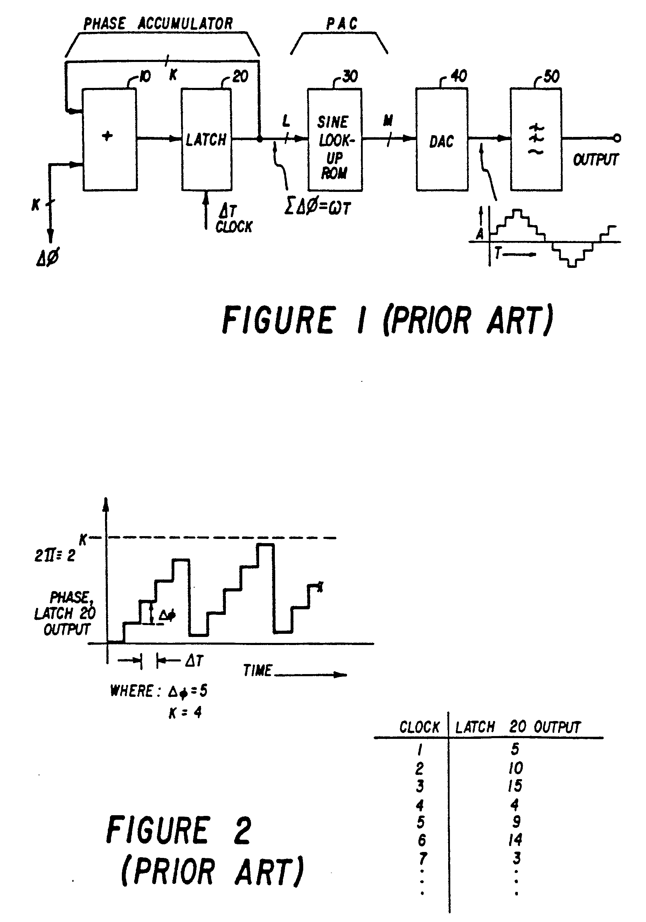

Numerical synthesis with digital technique in which a stream of points representing a desired signal is generated by using digital logic circuits avoids the above problems is so far as only the numerical data stream is converted into the actual desired signal by means of a digital-to-analog converter (DAC). An example of such a system for synthesizing signals in the prior art is described in US—A—3 928 813. Figure 1 of the accompanying drawings shows a block diagram of a typical digital numerical synthesizer known in the art, and is further described below.

Although prior art synthesizers using the numerical synthesis technique result in less complicated synthesizers than those using the direct and indirect synthesizer techniques, these prior art numerical synthesizers nevertheless have a definite drawback: they characteristically have a low output frequency. The numerical synthesizer in accordance with the present invention overcomes this drawback and simultaneously preserves the other advantages of the numerical synthesis technique.

In order to gain a better understanding of the advantages of the preferred embodiment in accordance with the invention, a brief discussion of numerical synthesizers in the prior art follows.

Essential to any numerical synthesizer is a phase accumulator, as shown in Figure 1. Its function is to generate a linearly increasing digital signal whose value represents phase in radians. The defining relation between frequency and phase is

$$F=(1/2\pi) \ (\Delta\phi/\Delta T)$$

where $\Delta\phi$ is a selected value representing a phase increment and $\Delta T$ is the period of the system clock for determining an output frequency. The number of different frequencies available in this synthesizer is then $2^K$, where K is the number of bits in the field for $\Delta\phi$. If K equals 24 and the clock frequency $F_c=1/\Delta T$ is 33.55 MHz, then the frequency resolution is $(33.55\times10^6)/(2^{24})=2$ Hz. As illustrated in Figure 1, phase accumulation occurs by repeatedly adding at every clock cycle of 1/T Hz the last phase output to $\Delta\phi$. The phase output, then, at clock cycle N is:

$$\text{phase out}=N\Delta\phi$$

Eventually the adder in the accumulator will overflow, since it is modulo device with a modulo of $2^K$. This overflow does not cause a loss of useful·phase, however. Since $2^K$ represents $2\pi$ radians, any phase overflow represents the phase of the next cycle of output. This is illustrated in Figure 2.

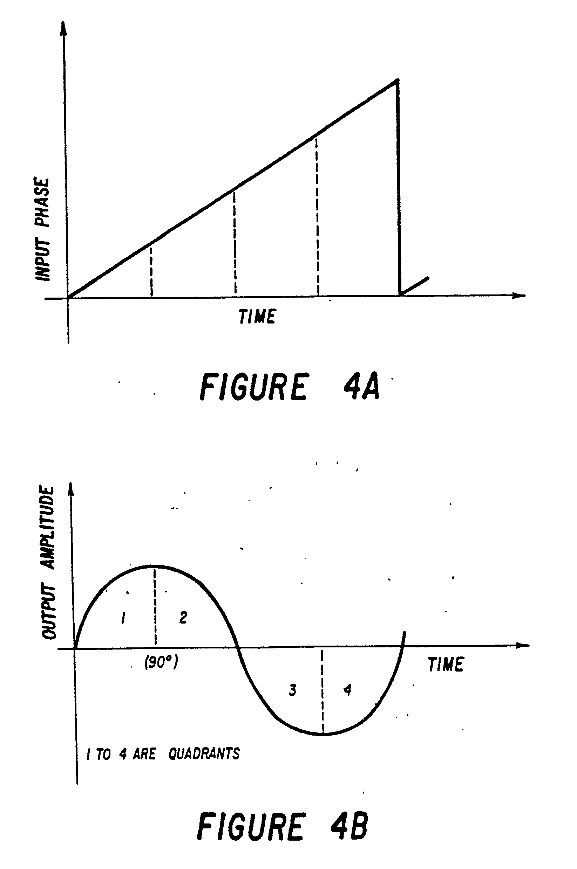

Once the phase is available, the next step is to convert it to a sinusoidal wave, that is, a wave whose amplitude varies with time. The amplitude is still maintained in digital form. According to the Nyquist or uniform sampling theory, two points on the sine wave are sufficient to perfectly describe it. If the sample points are not exactly correct in phase and amplitude, then harmonics and spurious signals result. The ideal phase-to-amplitude converter (PAC) is a sine lookup table, such as a prior art read-only-memory (ROM) with, for example, $2^K$ words, having each word or sine amplitude value infinitely accurate. The ROM 30 in Figure 1 is an example. In reality, however, only something less than the ideal is available. Figure 4 shows the PAC input-to-output relationship.

If constraint of infinite amplitude accuracy is reduced to an accuracy of M bits per word, then the ROM size would be $M2^K$ bits. For example, with a K=24 and M=12, the ROM would have 16.7 million words of 12 bits each. Choosing M=12 would give an amplitude resoltuion of 0.024 per cent. This ROM is far too large to be practical, and some bits must be ignored. If some significant bits, say L bits, are tapped off the phase accumulator output, then the phase input to the PAC is truncated. This truncation then results in spurious signals in the system. However, if L=14, then the spurious signals are less than −70dB. Thus, a practical approach is to use a ROM with 12 bits per word and 16K words.

The size of the ROM lookup table can be reduced even more by partitioning each output cycle into quadrants. Only 0—90° sine information must now be stored in the ROM. This allows the ROM to be 12×4K (48K bits) in size. Although this is a reasonable size, it must have a read access time of at least 30 nanoseconds (for a clock of 33.55 MHz). This access time is very small for this size of ROM. A clock frequency of 33.55 MHz gives a 12 MHz output signal range.

For clock speeds of 60 to 100 MHz the ROM lookup method is the limiting function block in the digital portion of the system. For example, if the $\Delta T$ of Figure 1 is 10 ns then the ROM sine lookup table would need a read access time of less than 10 ns, i.e., approximately 7 ns, for the case of a $12 \times 4K$ bit ROM. This is beyond the present state of the art. Also using a $1 \times 4K$ ROM would require 12 packages.

In view of the difficulties encountered in the prior art technique of converting a binary input signal representing phase to an output signal representing amplitude, it is the object of the invention to provide a method which overcomes the above-mentioned difficulties and allows the phase-to-amplitude conversion of signals having a high frequency, and this with high accuracy and by means of a simple and reliable equipment.

This object is met by the method of the invention which is characterized by the steps of:

separating said binary input signals into a first portion comprising higher order bits and a second portion comprising lower order bits;

addressing said first and second memory means with said first portion to provide said slope signal and a first amplitude signal;

multiplying said slope signal with said second portion to provide a second amplitude signal; and

adding said first and second amplitude signals to provide said output amplitude signal.

A phase-to-amplitude converter for performing this method comprises an input port for receiving an input binary signal representing phase, storage means coupled to said input port having a first portion for providing an amplitude signal, and a second portion for providing a slope signal, and adder means coupled to both portions of said storage means for providing a converter output signal representing amplitude. According to the invention, such a converter is characterized by:

said storage means being responsive to a first portion of said binary signal comprising higher order bits of said binary signal; and

multiplier means responsive to a second portion of said input binary signal comprising lower order bits of said binary signal and to said slope signal for providing a second amplitude signal, the adder means adding said first and second amplitude signals to produce said converter output signal.

In a converter as set forth in the last preceding paragraph it is preferred that said multiplier means further comprises a plurality of parallel input ports, each accepting both said first portion of said input binary signal and one bit of said subintermediate slope signal; a plurality of parallel adder circuits, each connected to a preselected group of said parallel input ports; and a multiplier output port connected to said plurality of parallel adder circuits for providing said second amplitude signal. In such a converter, said slope signal is multiplied with said second portion of the input signal by operating on said second portion with each bit of said slope signal in parallel to provide a plurality of resultant data, and by combining selected resulted data from said plurality to form said second amplitude signal.

Advantageously, a ROM is used for storing amplitude and slope information. The slope information from the ROM is multiplied with the input to give the second amplitude signal $M(N) \times X$. With the first amplitude signal $Y(N)$ and the second amplitude signal $M(N) \times X$, a sine waveform is defined. Naturally, if the segments are more numerous, the waveform approaches the ideal. In this way, less memory is required to synthesize a waveform with only a slight degradation of the waveform from ideal.

One disadvantage with multipliers is the inherent delay in the arithmetic operation. Multiplying even a 7-bit number with an 8-bit number could be too long, thus limiting the word length usable. To enhance the present scheme so that delays in a multiplier would not be prohibitive, a pipelined scheme incorporating dividers and adders to duplicate the multiplier is used. The result is a novel device to provide continuous phase-to-amplitude conversion for sine waveform generation.

There now follows a detailed description which is to be read with reference to the accompanying drawings of phase-to-amplitude converters according to the present invention; it is to be clearly understood that these converters have been selected for description to illustrate the invention by way of example and not by way of limitation.

In Figures 3 to 8 of the accompanying drawings:—

Figure 3 shows a two-segment one-quadrant approximation of a sine function;

Figure 4A shows a phase input and Figure 4B shows an example of a corresponding output of a PAC;

Figure 5 shows a preferred embodiment in accordance with the invention;

Figures 6A to 6C show the various input waveform relations for a five-segment sine wave approximation in accordance with the invention;

Figure 7 shows a detailed preferred embodiment in accordance with the invention; and

Figure 8 shows a scheme for completing a sine wave from a quadrant PAC in accordance with the invention.

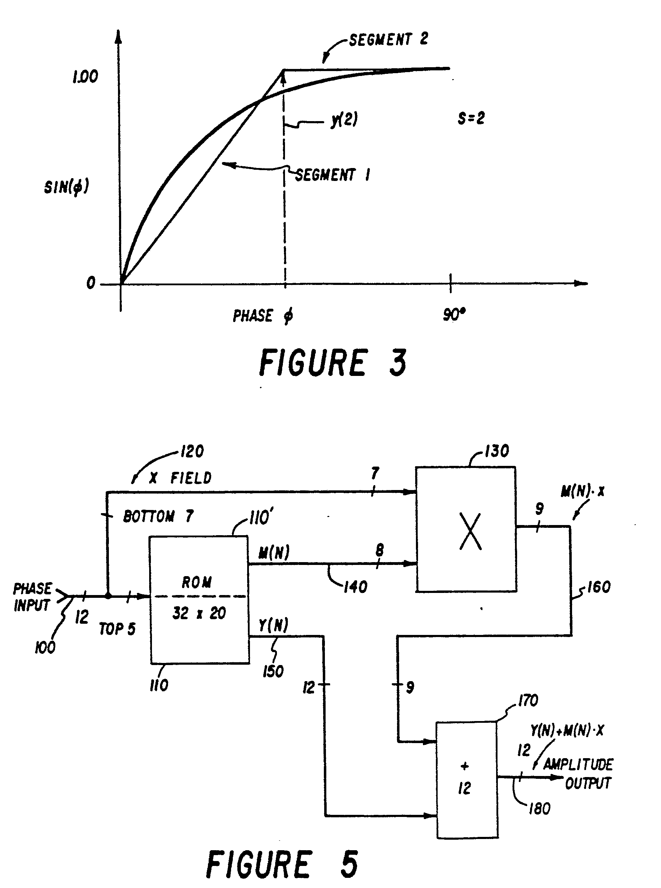

The technique in accordance with the present invention uses linear segments to approximate piecewise a sine function in the 0—90 degree quadrant. By piecing together S numbers of segments, the sine function can be approximated to any degree of accuracy. Analysis shows that for $S = 2^A$, where A is an integer, hardware is simplest. Figure 3 shows a waveform having a chordal segment fit of $S = 2$. The maximum departure error in this crude approximation is surprisingly small; it is only $\pm 2.75\%$. For $S = 32$, analysis shows that a 12-bit amplitude accuracy is achievable.

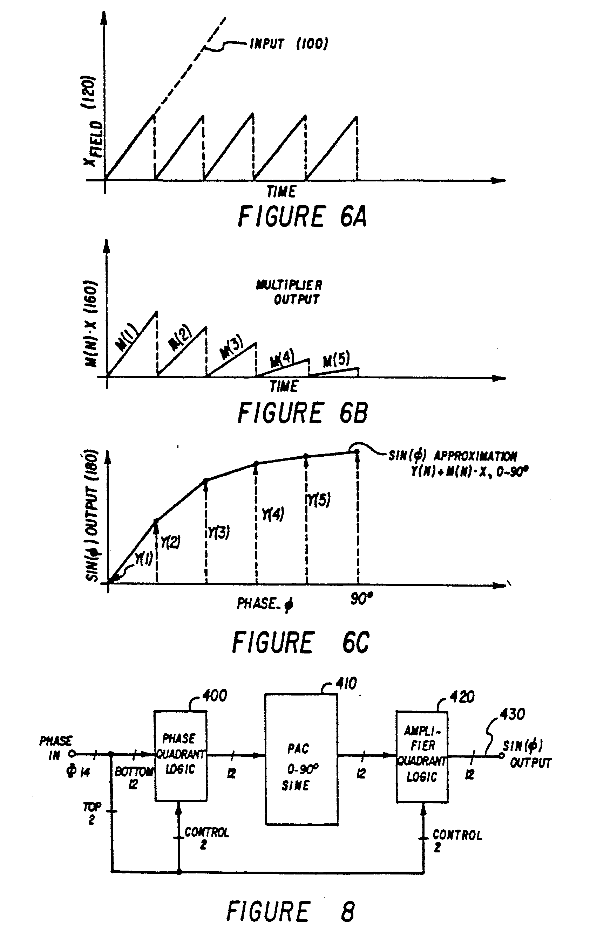

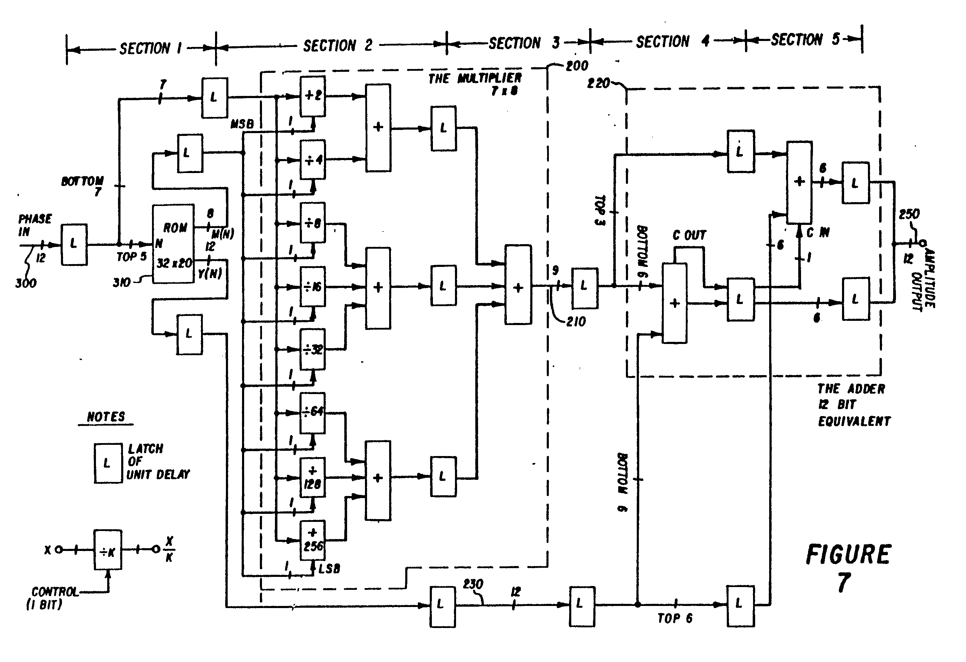

A block diagram of the hardware to implement this invention is shown in Figure 5. Three blocks are identified: a densely coded ROM 110, a 7×8 multiplier 130, and a 12-bit adder 170. The multiplier 130 has been optimized for a 9-bit output. The ROM 110 has two outputs: an 8-bit slope word on an output line 140 and a 12-bit amplitude word on output line 150. The slope word M(N), is the slope of segment N, where the integer N is selected as being from 1 to 32. The amplitude word Y(N) is the approximate amplitude of the sine function at the start of each segment. As is evident from Figure 3 Y(N) is *not* the exact value of sine(φ), since Y(N) represents only a chordal fit. Thus the total ROM storage needed is only (8+12)32=640 bits, rather than 4K×12 bits.

The operation of the phase-to-amplitude converter (PAC) in accordance with the invention is as follows: a 12-bit binary input representing phase (0 to 90 degrees) enters an input port 100. The first, or top 5 bits are used to address the ROM 110. These 5 bits specify the segment. The last, or lower, 7 bits from a field X 120. This field represents 128 linear points on each segment so the input phase is conveniently split up to form a segment word for selecting 32 segments and a linear staircase word of length 128 steps.

The final approximation at an output port 180 is the sum of Y(N) from the ROM output line 150 and M(N)×X from the multiplier output line 160. Figures 6A, 6B and 6C show the components of the approximation for a 5-segment example. Figure 6A shows the 12-bit phase input at input port 100. It also shows the X-field 120, i.e., the linear staircase for each segment. Figure 6B shows the multiplier output M(N)×X, whose slope gets progressively smaller as the phase approaches 90 degrees. Finally, Figure 6C is the sum of the multiplier output M(N)×X and Y(N), the sine wave approximation at the beginning of each segment. This output is the desired approximated 12-bit sinusoidal waveform.

Using numerical analysis and computer optimization ROM values M(N) and Y(n) can be picked to achieve 12-bit output accuracy of the approximated sine wave. A direct implementation of Figure 5 with ECL logic would not meet the desired objection of 7 ns computation rate. The 640-bit ROM is capable of 7 ns access time because of its small size. However, the multiplier and adder impose a speed penalty to prevent meeting the objective.

A feature of the present invention that overcomes these problems is a pipelined architecture. This is essentially a method that breaks an operation into several smaller operations each of which can be performed in the desired time. For example, the multiplier can be designed as a pipelined structure and split into several sections. Each section is isolated by input and output latches. A cascade of sections yields the results of a multiplier with the desired multiplier through-put rate and with only a latent input-to-output delay. If both the multiplier and adder are designed using pipelined techniques the PAC is then capable of the desired through-put rate.

Figure 7 shows a detailed logic diagram of the pipelined PAC in accordance with the invention. There the latches L, break larger operations into smaller ones while maintaining a high through-put rate. A total of six delays from the phase input to the amplitude output are present. This fixed delay is not objectionable since it is only a fixed delay in the generation of the output signal. Notice that five computation sections are needed.

The multiplier 200 is designed as a sum-of-products multiplier to allow pipeline latches to be placed at convenient locations. Other types of multipliers make pipelining difficult. The output of output line 210 is equivalent to the output on output line 160 of Figure 5.

Also included in the PAC is a pipelined adder 220. This adder splits the 12-bit add into two 6-bit adds. Again, each add is performed in the desired time so the total 12-bit add has the desired through-put rate. The inputs to the adder 220 are on two output lines 230, 210, from the multiplier 200, while the 12-bit output of the adder is on the output line 250. The output corresponds to that on output line 180 of Figure 5. The 12-bit phase is input at the PAC input port 300. From there the input is coupled to a 640-bit ROM 310. This ROM 310 provides the two outputs Y(N) and M(N).

The advantages of Figure 7 over a purely ROM lockup implementation are manyfold. Firstly, the architecture allows the desired through-put to be achieved while a ROM lookup scheme does not. Secondly, the entire circuit can easily be implemented on a single integrated circuit. This compared favorably to the prior art alternative of requiring a 48K-ROM-lookup table composed of several ROM's to achieve the 12-bit word length of the PAC in accordance with the invention. Furthermore, the input-to-output delay in the preferred embodiment of Figure 7 is acceptable, unlike the delays in the prior art PAC's using multipliers.

Figure 8 shows a PAC 410 joined to a phase quadrant logic 400 and an amplitude quadrant logic 420. Together these components yield a phase-to-amplitude converter equivalent to one having a bit density of $12^{14}\times12=197K$ bits. The entire circuit in Figure 8 can be integrated onto a single monolithic chip. This architecture allows phase in (φ) to span from zero to 360 degrees. Thus, a complete and continuous sine functions is generated.

**Claims**

1. A method of converting a binary input signal representing phase to an output signal representing amplitude, by addressing a first memory means for storing amplitude values with said binary input signal to provide an amplitude signal, addressing a second memory means for storing slope values with said binary input signal to provide a slope signal, and combining said slope signal and said amplitude signal to provide said output amplitude signal, the method being characterized by the steps of:
separating said binary input signal into a first portion comprising higher order bits and a second portion comprising lower order bits;

addressing said first and second memory means with said first portion to provide said slope signal and a first amplitude signal;

multiplying said slope signal with said second portion to provide a second amplitude signal; and

adding said first and second amplitude signals to provide said output amplitude signal.

2. A method according to claim 1, characterized in that said step of multiplying said slope signal with said second portion further comprises:

operating on said second portion with each bit of said slope signal in parallel to provide a plurality of resultant data: and

combining selected resultant data from said plurality to form said second amplitude signal.

3. A phase-to-amplitude converter for performing the method according to claim 1 or 2 comprising an input port (100) for receiving an input binary signal representing phase, storage means (110) coupled to said input port (100) having a first portion for providing an amplitude signal (Y(N)), and a second portion for providing a slope signal (M(N)), and adder means (170) coupled to both portions of said storage means (110) for providing a converter output signal representing amplitude, the converter being characterized by:

said storage means (110) being responsive to a first portion of said binary signal comprising higher order bits of said binary signal; and

multiplier means (130), responsive to a second portion of said input binary signal comprising lower order bits of said binary signal and to said slope signal (M(N)), for providing a second amplitude signal, the adder means (170) adding said first and second amplitude signals to produce said converter output signal.

4. A phase-to-amplitude converter according to claim 3, characterized in that said multiplier means (200) further comprises:

a plurality of parallel input ports, each accepting both said second portion of said input binary signal and one bit of said slope signal;

a plurality of parallel adder circuits each connected to a preselected group of said parallel input ports; and

a multiplier output port (210) connected to said plurality of parallel adder circuits for providing said second amplitude signal.

**Patentansprüche**

1. Verfahren zum Umsetzen eines eine Phase darstellenden binären Eingangssignales in ein eine Amplitude darstellendes Ausgangssignal durch Adressieren eines ersten Speichers, der Amplitudenwerte enthält, mit dem binären Eingangssignal zur Gewinnung eines Amplitudensignals, Adressieren eines zweiten Speichers, der Anstiegswerte enthält, mit dem binären Eingangssignal zur Gewinnung eines Anstiegssignals, und Kombinieren des Anstiegssignals und des Amplitudensignals zur Erzeugung des genannten Amplituden-Ausgangssignals, gekennzeichnet durch die folgenden Schritte:

Trennen des binären Eingangssignals in einen ersten Teil, der die höherstelligen Bits umfaßt, und einen zweiten Teil, der die niedrigerstelligen Bits umfaßt,

Adressieren des ersten und des zweiten Speichers mit dem ersten Teil zur Gewinnung des Anstiegssignals und eines ersten Amplitudensignals,

Multiplizieren des Anstiegssignals mit dem zweiten Teil zur Erzeugung eines zweiten Amplitudensignals und

Addieren der ersten und zweiten Amplitudensignale zur Erzeugung des genannten Amplituden-Ausgangssignals.

2. Verfahren nach Anspruch 1, dadurch gekennzeichnet, daß der Schritt des Multiplizierens des Anstiegssignals mit dem zweiten Teil weiterhin umfaßt

das parallele Verarbeiten des zweiten Teils mit jedem Bit des Anstiegssignals zur Erzeugung einer Anzahl resultierender Daten und

Kombinieren von Daten, die aus der genannten Anzahl resultierender Daten ausgewählt sind, zur Bildung des genannten zweiten Amplitudensignals.

3. Phasen/Amplituden-Umsetzer zur Durchführung des Verfahrens nach Anspruch 1 oder 2 mit einem Eingang (100) zum Empfang eines eine Phase darstellenden binären Eingangssignals, mit einem an den Eingang angeschlossenen Speicher (110), der einen ersten Teil zum Liefern eines Amplitudensignals (Y(N)) und einen zweiten Teil zum Liefern eines Anstiegssignals (M(N)) umfaßt, und mit einem mit den beiden Teilen des Speichers (110) verbundenen Addierer (170) zur Erzeugung eines eine Amplitude darstellenden Umsetzer-Ausgangssignals, dadurch gekennzeichnet,

daß der Speicher auf einen ersten Teil des binären Eingangssignals anspricht, der die höherstelligen Bits dieses binären Eingangssignals umfaßt,

daß ein Multiplizierer (130) auf einen zweiten Teil des binären Eingangssignals, der die niedrigerstelligen Bits des binären Eingangssignals umfaßt, und auf das genannte Anstiegssignal (M(N)) anspricht, um ein zweites Amplitudensignal zu erzeugen, und

daß der Addierer (170 die ersten und zweiten Amplitudensignale addiert, um das genannte Umsetzer-Ausgangssignal zu erzeugen.

4. Phasen/amplituden-Umsetzer nach Anspruch 3, dadurch gekennzeichnet, daß der Multiplizierer (200) weiterhin umfaßt eine Anzahl paralleler Eingänge, von denen jeder sowohl den zweiten Teil des binären Eingangssignals als auch ein Bit des genannten Anstiegssignals aufnimmt,

eine Anzahl paralleler Addierkreise, von denen jeder mit einer ausgewählten Gruppe der parallelen Eingänge verbunden ist, und

einen Ausgangs (210), der mit der Anzahl paralleler Addierkreise verbunden ist, um das zweite Amplitudensignal zu liefern.

## Revendications

1. Procédé pour convertir un signal d'entrée binaire représentant une phase en un signal de sortie représentant une amplitude, par adressage d'un premier dispositif de mémoire servant à mémoriser des valeurs d'amplitudes, au moyen dudit signal d'entrée binaire pour fournir un signal d'amplitude, adressage d'un second dispositif de mémoire pour mémoriser des valeurs de pentes au moyen dudit signal d'entrée binaire pour produire un signal de pente, et combinaison dudit signal de pente et dudit signal d'amplitude pour produire ledit signal d'amplitude de sortie, ce procédé étant caractérisé par les étapes consistant à:

subdiviser ledit signal d'entrée binaire en une première partie comprenant des bits d'ordre supérieure et une seconde partie comprenant des bits d'ordre inférieur;

adresser lesdits premier et second dispositifs de mémoire au moyen de ladite première partie pour obtenir ledit signal de pente et un premier signal d'amplitude;

multiplier ledit signal de pente par ladite seconde partie de manière à obtenir un second signal d'amplitude; et

ajouter lesdits premier et second signaux d'amplitude pour obtenir ledit signal d'amplitude de sortie.

2. Procédé selon la revendication 1, caractérisé en ce que ladite étape consistant à multiplier ledit signal de pente par ladite seconde partie inclut en outre les opérations consistant à:

agir sur ladite seconde partie avec chaque bit dudit signal de pente en parallèle pour obtenir une pluralité de données résultantes; et

combiner les données résultantes choisies parmi ladite pluralité de données résultantes pour former ledit second signal d'amplitude.

3. Convertisseur phase-amplitude pour la mise en oeuvre du procédé selon la revendication 1 ou 2, comportant un accès d'entrée (100) servant à recevoir un signal d'entrée binaire représentant une phase, un dispositif de mémoire (110) accouplé audit accès d'entrée (100) et comportant une première partie servant à délivrer un signal d'amplitude Y(N)) et une seconde partie servant à délivrer un signal de pente (M(N)), et des moyens additionneurs (110) accouplés aux deux parties dudit dispositif de mémoire (110) pour délivrer un signal de sortie du convertisseur représentant une amplitude, le convertisseur étant caractérisé en ce que:

lesdits moyens de mémoire (110) sont sensibles à une première partie dudit signal binaire contenant des bits d'ordre supérieur dudit signal binaire; et

des moyens multiplicateurs (130) sensibles à une seconde partie dudit signal binaire d'entrée contenant des bits d'ordre inférieur dudit signal binaire, et audit signal de pente (M(N)) pour délivrer un second signal d'amplitude, les moyens additionneurs (110) additionnant lesdits premier et second signaux d'amplitude pour produire ledit signal de sortie du convertisseur.

4. Convertisseur phase-amplitude selon la revendication 3, caractérisé en ce que lesdits moyens multiplicateurs (200) comprennent en outre:

une pluralité d'accès d'entrée en parallèle acceptant chacune à la fois ladite seconde partie dudit signal binaire d'entrée et un bit dudit signal de pente;

une pluralité de circuits additionneurs parallèles raccordés chacun à un groupe présélectionné desdits accès d'entrée en parallèle; et

un accès de sortie (210) du multiplicateur raccordé à ladite pluralité de circuits additionneurs en parallèle pour délivrer ledit second signal d'amplitude.

0 102 784

FIGURE 1 (PRIOR ART)

WHERE: $\Delta\phi = 5$
$K = 4$

FIGURE 2
(PRIOR ART)

| CLOCK | LATCH 20 OUTPUT |
|---|---|
| 1 | 5 |
| 2 | 10 |
| 3 | 15 |
| 4 | 4 |
| 5 | 9 |
| 6 | 14 |
| 7 | 3 |
| ⋮ | ⋮ |

FIGURE 3

FIGURE 5

FIGURE 4A

I TO 4 ARE QUADRANTS

FIGURE 4B

FIGURE 6A

FIGURE 6B

FIGURE 6C

FIGURE 8

FIGURE 7